# EUROPEAN PATENT APPLICATION

(11) **EP 2 224 380 A1**
(43) Date of publication of application: **01.09.2010**
(21) Application number: 10001471.1
(22) Date of filing: 12.02.2010
(51) Int. Cl.: G06Q 10/00

(54) **Method and system for expressing and enforcing non-functional concerns in business process management systems and workflow systems**

(30) Priority: 25.02.2009 US 392110
(71) Applicant: SAP AG, 69190 Walldorf (DE)
(72) Inventor: Charfi, Anis, 69190 Walldorf (DE)
(74) Representative: Müller-Boré & Partner Patentanwälte

(57) **Abstract**

A system and method to express and enforce non-functional properties in process management systems are described. Non-functional properties are expressed via annotations. Annotations and corresponding constraints are grouped in profiles. Further, non-functional properties are enforced via rules specified in enforcement patterns that are associated with the annotations. The enforcement patterns extend processes with additional process elements and logic for enforcing non-functional properties at runtime.

## Description

### FIELD OF THE INVENTION

The invention relates generally to business process management and workflow systems, and, more specifically, to expressing and enforcing non-functional concerns in such systems.

### BACKGROUND OF THE INVENTION

Current business process management ("BPM") systems and workflow management ("WFM") systems support mainly the functional concerns of business processes and workflow processes such as control flow (i.e., sequencing of activities), data and information flow, and organizational concerns. In most BPM systems and WFM systems there is no support for expressing and enforcing non-functional concerns such as security, performance, throughput, SLA constraints, execution time constraints, and so on. Users of such systems may need support for non-functional concerns to cope with the requirements of their use cases or their application domains. Current BPM and WFM systems cannot be extended by end users to support non-functional concerns on demand as such concerns arise. If at all, these systems support only a pre-defined set of non-functional concerns, i.e., only those that were foreseen by the software provider.

### SUMMARY OF THE INVENTION

A system and method to express and enforce non-functional concerns in business process management and workflow management systems. Non-functional concerns are expressed via annotations that are defined and grouped in profiles. Further, non-functional concerns are enforced via enforcement patterns, which allow producing processes with additional elements and activities that enforce non-functional concerns.

### BRIEF DESCRIPTION OF THE DRAWINGS

The invention is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

**FIG. 1** is a block diagram of an embodiment of the invention for expressing and enforcing non-functional concerns in a business or workflow process.

**FIG. 2** is a flow diagram of an embodiment of the invention for expressing and enforcing non-functional concerns in a business or workflow process.

**FIG. 3** is a flow diagram of an embodiment of the invention for creating annotations and defining constraints on the applicability and the interdependencies of annotations.

**FIG. 4** is a flow diagram of an embodiment of the invention for creating an enforcement pattern.

**FIG. 5** is a flow diagram of an embodiment of the invention for transforming a process to enforce non-functional concerns at runtime.

### DETAILED DESCRIPTION

A system and method for extending business process management ("BPM") systems and workflow management ("WFM") systems on demand with support for non-functional concerns as necessary. Non-functional concerns are also referred to as "extra-functional" concerns. A method of one embodiment of the invention defines custom annotations for expressing non-functional concerns and enforcement patterns, which are used by a process transformation tool to generate additional process elements for the enforcement of the non-functional concerns specified by the annotations. Examples of process elements may be, but are not limited to, data declarations, participant declarations, application declarations, control flows, data flows, and activities.

A business process is a collection of activities (also called tasks or steps) to accomplish a business goal. Business processes define a set of interrelated activities, which, if performed in a specified pattern, produce a desired output. A workflow process defines the flow of work across an organization. BPM systems and WFM systems cover the functional concerns of business processes and workflow processes. Examples of functional concerns may be: activities to be executed, control flow (i.e., the ordering of activities and their dependencies), data flow (i.e., the flow of data and information between activities), organizational aspects (i.e., assignments of users to activities, the organizational structure and role hierarchy, and so on), and technical aspects (i.e., which software applications support the execution of a given task). In addition to these functional concerns, there may be several non-functional concerns (also called extra-functional concerns) that may need to be supported by BPM systems and WFM systems to ensure a reliable, secure, and Service-Level Agreement ("SLA") compliant implementation and execution of business processes and workflow processes. Examples of non-functional concerns may be security, execution time constraints, SLA-compliance, performance, throughput, costs, and so on. In addition to these examples, there may be non-functional concerns that are specific to an organization, which uses a BPM system or WFM system. It is difficult for the provider of the BPM system or WFM system to predict and implement all non-functional concerns that customer organizations may need. Thus, there is a need to extend BMP systems and WFM systems on demand with support for non-functional concerns in a business process or a workflow process as required by an organization. This support may include the ability to express non-functional concerns at design-time and the ability to enforce non-functional concerns at runtime.

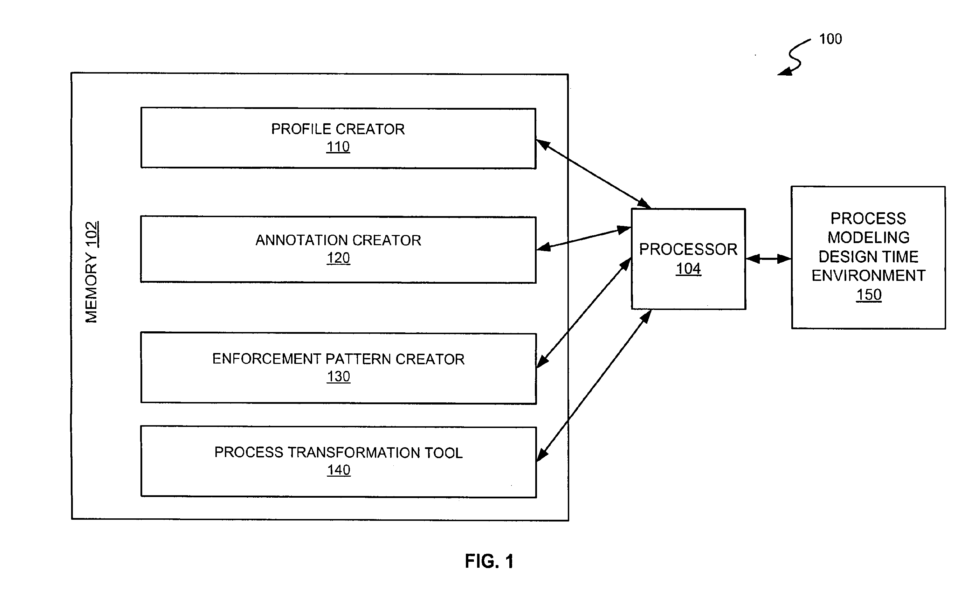

FIG. 1 is a block diagram of an embodiment of the invention for expressing and enforcing non-functional concerns in a business or workflow process. Referring to FIG. 1, system 100 provides the following modules to express non-functional concerns in a process: a profile creator 110, an annotation creator 120, and an enforcement pattern creator 130. The profile creator 110, annotation creator 120, enforcement pattern creator 130, and a process transformation tool 140 may be loaded in a memory 102.

Annotations are design time elements that may be attached to a process model, to an element of a process model, or to a group of elements in a process model. Annotations may be used to express non-functional properties on the workflow process model or on the business process model as a whole, of individual activities or other process elements, or of groups of process elements. For example, a user may define annotations to express that a group of activities should be executed in a transactional way. Other annotations may be defined to express that an activity, which interacts with a third party system, should be executed securely. Different security annotations may be defined for different purposes, e.g., for integrity, confidentiality, authentication, and so on. In an exemplary embodiment of the invention, an annotation secure_conversation_boundary is defined. The secure_conversation_boundary annotation may be associated with a sub-process or with a composite activity (i.e., an activity that has child activities), to express that the activity or sub-process including all nested activities should be executed using a security context. A secure_conversation_participant annotation may be defined to designate the individual activities that use the secure conversation inside a composite activity or a sub-process. Other annotations may be defined, such as confidentiality_required, integrity_required, authentication_required. These annotations may be associated with activities or other elements of the process model, such as, data objects or data flows to define their security properties. SLA-related annotations may also be defined, such as maximum_execution_time, which may specify the maximum execution time allowed for a certain activity or sub-process. In addition to the annotation name, the annotation creator 120 may define a set of attributes with key-value pairs specifying certain parameters for the annotation. The key part of the attribute may represent the name of the attribute. A type may also be specified for the attribute value to designate acceptable values. For example, the security annotation authentication_required may have an attribute called "type", which may have possible values such as "username-password" or "X.509 certificate", and so on. The security annotation confidentiality_required may have an attribute with the name "encryption algorithm", which may have as value, the name of a specific algorithm that should be used to ensure confidentiality.

The profile creator 110 may create profiles to group related annotations. For example, the profile creator 110 may define a "security" profile to group annotations for encryption, confidentiality, and other security-related annotations. In another embodiment, the profile creator 110 may define a "secure conversation" profile grouping the annotations secure_conversation_boundary and participates_in_secure_conversation. The profile creator 110 may also define constraints on the applicability of the annotation to elements of the process model. These may be constraints that define which annotations may be associated with which elements of the process model and under which conditions. For example, the profile creator 110 may define that the annotation participates_in_secure_conversation can be associated only with a sub-process and not with data objects. Further, the profile creator 110 may define a constraint expressing that the annotation participates_in_secure_conversation may be associated only with non-composite activities. In addition, the profile creator 110 may define constraints expressing dependencies between individual annotations. For example, the profile creator 110 may specify that the annotation participates_ in_secure_conversation may not be used for an activity unless one of its parent activities is annotated with the annotation secure_conversation_boundary. In an alternative embodiment of the invention, the profile creator 110 may define further types of constraints.

The enforcement pattern creator 130 creates enforcement patterns that specify how the non-functional properties expressed by given annotations should be enforced at process execution time. An enforcement pattern is some process logic (i.e., a set of process elements such as data declarations, participant declaration, and activities) that expresses a transformation of the business process model or workflow process model, which enforces a certain non-functional property. For example, in one embodiment, an enforcement pattern may specify that the execution of a composite activity with the annotation secure_conversation_boundary should be performed according to the following pattern. First, an activity for creating the secure conversation context should be executed. Then, for each activity that is nested in the sub-process and which has the annotation participates_in_secure_conversation, an activity has to be called, which invokes a middleware service to secure the annotated child activity using the previously created context. After the composite activity with the annotation secure_conversation_ boundary, an activity should be executed, which destroys the secure conversation context.

In another embodiment, enforcement patterns for measuring the execution time of a process activity or a sub-process may be created. Assuming that there is an annotation maximum_execution_time that can be associated with activities, the enforcement pattern for this annotation may consist of an activity which calls a timing service to get the current time. The enforcement pattern then executes the annotated activity, and after that, executes a subsequent activity, which calls the timing service again to get the time after the annotated activity has completed. The two dates returned by the activities that call the timing service allow the calculation of the execution time of the activity that has the annotation maximum_execution_time. The enforcement pattern may also specify what should be done when the computed execution time is higher than the value specified in the annotation (e.g., an error should be thrown, an e-mail notification should be sent, and so on).

After the profile creator 110, the annotation creator 120, and the enforcement pattern creator 130 create the profiles, annotations, and enforcement patterns, the process transformation tool 140 uses the enforcement patterns to modify a business process or a workflow process by adding new process elements and activities that enforce the non-functional properties expressed by the annotations at execution time. The profile creator 110, the annotation creator 120, and the enforcement pattern creator 130 may also create input for a processor 104. The processor 104 may receive the input and produce output as instructed by the profile creator 110, the annotation creator 120, and the enforcement pattern creator 130. The processor 104 may also create input for a process modeling design time environment 150 to display. In one embodiment, the process modeling design time environment 150 may be part of a graphical user interface. The graphical user interface may be displayed on a screen, monitor, or other type of rendering device.

The process transformation tool 140 identifies the annotated process model elements and then transforms the process model by replacing each annotated process model element (e.g., activity) by one or more process elements or activities that may include the annotated activity itself. As a result of this transformation, the process elements and activities that are defined in the enforcement pattern are added to the original process model, thus ensuring the enforcement of the non-functional properties when the process is executed. The process modeling design time environment 150 may also be used to define the business processes or workflow processes, to associate annotations with process elements, and display the transformed process generated by the process transformation tool 140.

There are a number of advantages in enforcing non-functional concerns using the system of FIG. 1. First, end users may extend the BPM system or WFM system with support for non-functional concerns that were not provided by the system provider. Second, end users do not depend on the system provider when they need to support certain non-functional concerns as they can do that by themselves. Third, the system provider also benefits because certain requirements (e.g., those that are customer-specific) can be addressed by the customers, thus saving time and money for the system provider because custom development for a particular customer is not necessary. In addition, the system 100 as described in FIG. 1 may support any number of non-functional concerns as all non-functional concerns are defined and enforced in the same way generically. Supporting further non-functional concerns does not require any changes to the system 100 as described in FIG. 1.

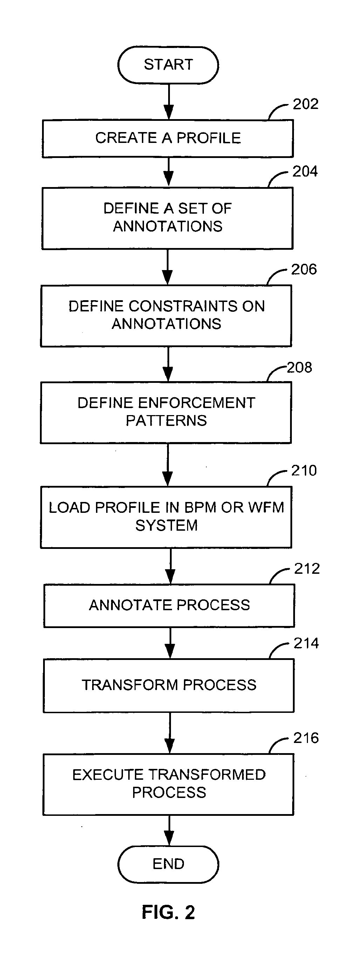

FIG. 2 is a flow diagram of an embodiment of the invention for expressing and enforcing non-functional concerns in a business process or workflow process. Referring to FIG. 2, at process block 202, a profile is created. The profile may serve two purposes. First, a profile may group annotations of a specific type, such as security annotations, performance annotations, and so on. Second, a profile may define various types of constraints related to the annotations that ensure appropriate and correct usage of the annotations by the end users. These constraints include constraints on the applicability of the annotations to process elements (e.g., a given annotation may be applied only to data objects in the process model and not to activities) and constraints expressing interdependencies between annotations (e.g., if one annotation is applied to one process model element then another annotation may not be applied to that same element). At process block 204, a set of annotations for the profile is defined. Annotations are design time elements that may be used to express non-functional properties of the workflow process model or the business process model as a whole or of selected elements in the process model. At process block 206, constraints on the applicability and interdependencies of the annotations in the set are defined. At process block 208, enforcement patterns are defined. In one embodiment, several enforcement patterns may be defined for one profile. An enforcement pattern specifies for one or a group of related annotations how the process should be transformed in order to enforce the non-functional concerns expressed by the annotation during runtime. At process block 210, the profile and the corresponding enforcement pattern or patterns are loaded in a BPM or WFM design time environment. The process is annotated as necessary with the annotations supplied in the profile at process block 212. At process block 214, the process is transformed so that the non-functional concerns expressed in the annotations are enforced at runtime. At process block 216, the transformed process is executed and when executed, the transformed process includes all the non-functional concerns as specified by the set of annotations.

In an alternative embodiment of the invention, the process as described in FIG. 2 is performed by components as in FIG. 1. Referring to FIGs. 1 and 2, at process block 202, the profile creator 110 creates a profile. At process block 204, the annotation creator 120 creates a set of annotations for the profile. At process block 206, the profile creator 110 creates constraints on the applicability and interdependencies of the annotations in the set. At process block 208, the enforcement pattern creator 130 defines an enforcement pattern. In one embodiment, the enforcement pattern creator 130 may define more than one enforcement patterns for one profile. At process block 210, the processor 104 loads the profile and enforcement pattern in the process modeling design time environment 150. The process is annotated as necessary with the annotations supplied in the profile at process block 212. At process block 214, the process transformation tool 140 transforms the process so that the non-functional concerns expressed in the annotations are enforced at runtime. At process block 216, the processor executes the transformed process.

In an alternative embodiment, each of the components in FIG. 1 may perform one or more of the process blocks of the process of FIG. 2 via the processor 104. The processor 104 may receive input from the components of FIG. 1, perform operations based on the received input and send output to one or more of the components in FIG. 1.

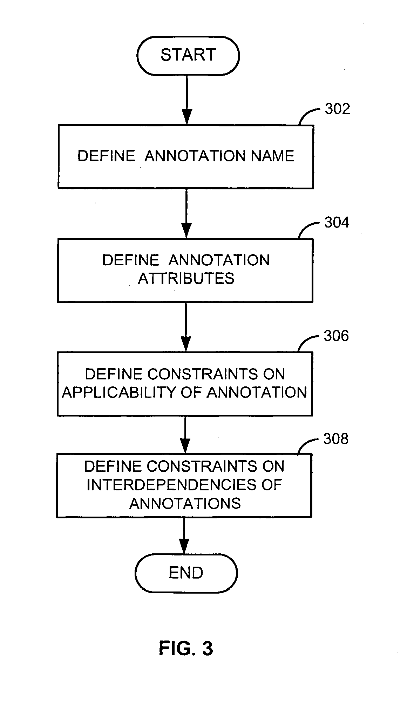

FIG. 3 is a flow diagram of an embodiment of the invention for creating annotations and defining constraints on their applicability and their interdependencies. Referring to FIG. 3, at process block 302, a name for an annotation is defined. At process block 304, a set of attributes for the annotation is defined. An attribute consists of an attribute name and attribute value. An attribute may also define the type of the attribute value. For example, a possible attribute of the annotation maximum_execution_time may be "value", which may have a numerical value as type. Another possible attribute of the annotation maximum_execution_time may be "unit", which specifies the type of time unit (e.g., seconds, minutes and so on). At process block 306, constraints on the applicability of the annotation are defined. These constraints specify the process elements to which specific annotations can be applied. At process block 308, constraints expressing interdependencies between annotations are defined. These constraints may specify, for example, that certain annotations are exclusive (i.e., if one is applied to some process model element then the other cannot be applied), or that some annotation may be applied to a child activity only if some other annotation has been applied to the parent activity.

In an alternative embodiment of the invention, the process as described in FIG. 3 is performed by components as described in FIG. 1. Referring to FIGs. 1 and 3, at process block 302, the annotation creator 120 defines a name for the annotation. At process block 304, the annotation creator 120 defines attributes to express the parameters of the non-functional concern the annotation defines. At process block 306, the profile creator 110 defines constraints on the applicability of the annotation. At process block 308, the profile creator 110 defines constraints on the interdependencies between annotations.

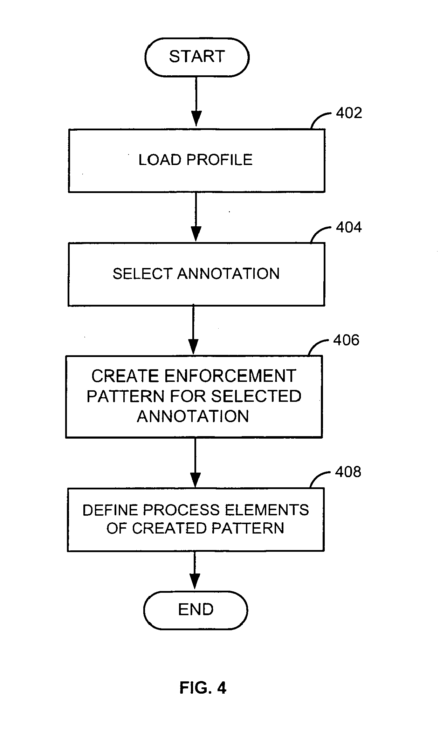

FIG. 4 is a flow diagram of an embodiment of the invention for creating an enforcement pattern. Referring to FIG. 4, at process block 402, a profile is loaded. The profile may define annotations and respective constraints. At process block 404, an annotation is selected. At process block 406, an enforcement pattern is created. At process block 408, the process elements and activities of the enforcement pattern are defined to ensure the enforcement at runtime of the non-functional property expressed by the annotation. These process elements may include the annotated process element itself.

In an alternative embodiment, an annotation may be associated with more than one enforcement pattern. In another embodiment, an enforcement pattern may be defined for a set of annotations. In one embodiment, many enforcement patterns may be associated with a profile.

In an alternative embodiment of the invention, the process as described in FIG. 4 is performed by components as described in FIG. 1. Referring to FIGs. 1 and 4, at process block 402, the enforcement pattern creator 130 loads a profile. At process block 404, the enforcement pattern creator 130 selects an annotation from the profile. At process block 406, the enforcement pattern creator 130 creates an enforcement pattern for the selected annotation. At process block 408, the enforcement pattern creator 130 defines a set of activities for the created enforcement pattern, which when added to a process ensure the enforcement at runtime of the non-functional properties expressed by the annotation.

In one embodiment, the enforcement pattern creator 130 may create an enforcement pattern for a set of annotations. In an alternative embodiment, the enforcement pattern creator 130 may create several enforcement patterns to be associated with one profile.

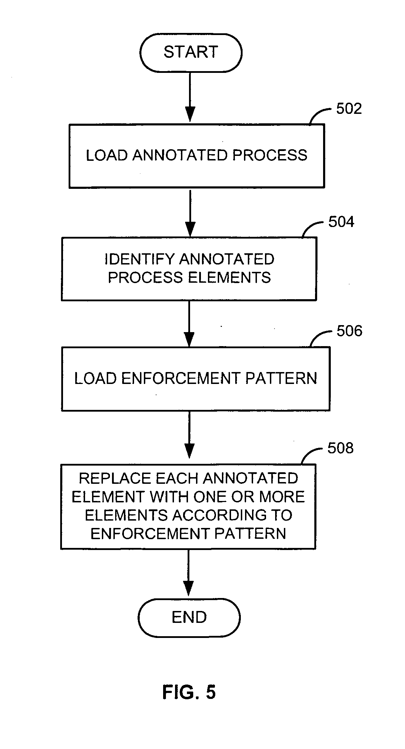

FIG. 5 is a flow diagram of an embodiment of the invention for transforming a process to enforce non-functional concerns at runtime. Referring to FIG. 5, at process block 502, an annotated process is loaded. At process block 504, annotated process elements are identified. At process block 506, the enforcement patterns for the profile are loaded. At process block 508, each annotated element is replaced by one or more process elements and activities according to the enforcement pattern.

In an alternative embodiment of the invention, the process as described in FIG. 5 is performed by components as described in FIG. 1. Referring to FIGs. 1 and 5, at process block 502, the process transformation tool 140 loads an annotated process. At process block 504, the process transformation tool 140 identifies annotated process elements. At process block 506, the process transformation tool 140 loads the enforcement patterns associated with the profile. At process block 508, the process transformation tool 140 replaces each annotated process element by one or more process elements according to the enforcement pattern associated with the annotated process element.

In another embodiment of the invention, a BPM system based on Business Process Modeling Notation ("BPMN") is used. With a BPMN-based tool, profiles may be defined based on the annotation concept of BPMN. As BPMN is a modeling language, profile constraints may be expressed using languages such as the Object Constraint Language ("OCL"). Enforcement patterns may be expressed using BPMN constructs. A process transformation tool may be built using Model-to-Model transformation techniques such as the ATLAS Transformation Language ("ATL").

In an alternative embodiment of the invention, a WFM system based on the Web Services Business Process Execution Language ("WS-BPEL") is used. In this exemplary WFM system annotations may be defined using WS-BPEL. WS-BPEL provides extensibility concepts allowing the use of new elements in the process models and adding new attributes to WS-BPEL language constructs given that the new elements and attributes have non-BPEL namespaces. This means that annotations can be defined by creating new XML elements or new attributes of WS-BPEL elements (in this case, using other namespaces). The constraints related to these annotations may be defined using constraint languages for XML or XML schema. The profiles may define the XML elements that implement the different annotations and the respective applicability and constraints and interdependencies constraints on applicability. The enforcement patterns in this case may be expressed using WS-BPEL language constructs such as partners, variables, and activities. As WS-BPEL is based on the extensible Markup Language ("XML"), the process transformation in this exemplary embodiment may be implemented using the XML transformation language extensible Stylesheet Language Transformations ("XSLT").

The listing below shows an exemplary sequence activity in BPEL, which contains two nested web service calls via the invoke activity. An annotation is applied to the sequence activity using the new attribute maxAllowedTime of the namespace mns.
The value of this attribute defines the maximum allowed time for the annotated activity in seconds. This attribute is not a standard attribute of the sequence activity.

```
              <sequence name="MySeq" mns:maxallowedTime="60">
              <invoke name="verifyCreditCardData" ... />
              <invoke name="performPayment" ... />
              </sequence>
```

The following listing shows the enforcement pattern in WS-BPEL for the annotation mns:maxallowedTime. This pattern nests the annotated activity in between two calls to the timing web service (first to start the timer and then to stop it).

```
              <!-partner link declarations for the enforcement pattern-->
              <partnerLink name="TimingServiceLink .../>
              <sequence>
              <invoke name="startMeasuringTimer" operation="startTimer" ... />
              <!-the following statement results in integrating the annotated activity
              <ins:placeholder value="getActivity(maxAllowedTime)">
              <invoke name="stopMeasuringTime" operation="stopTimer" />
              </sequence>
```

In this scenario, an XSLT based process transformation tool uses the enforcement patterns to transform the WS-BPEL process so that the non-functional properties expressed using annotations such as mns:maxallowedTime, are enforced.

Embodiments of the present invention are not restricted to a specific business process management system or to a specific workflow management system. Embodiments of the present invention can be incorporated in any such tool given that the underlying business process language or workflow language supports annotations or provides a similar extensibility concept. Enforcement patterns may be defined using the constructs of the process language or the workflow language used in that specific tool. The process transformation tool may be implemented either by using some transformation technology for models, for XML, for textual files or using custom coding. Thus, embodiments of the invention can support both graphical process modeling languages and text-based languages such as those based on XML.

Elements of embodiments of the invention described herein may also be provided as a machine-readable medium for storing the machine-executable instructions. The machine-readable medium may include, but is not limited to, flash memory, optical disks, CD-ROMs, DVD ROMs, RAMs, EPROMs, EEPROMs, and magnetic or optical cares.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention. In the foregoing specification, the invention has been described with reference to the specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. A computing system, comprising:
a profile creator to define a set of annotations in a profile;
an annotation creator to create each of the annotations in the set in the profile, each of the annotations to express a non-functional property of a process;
an enforcement pattern creator to create an enforcement pattern, the enforcement pattern to define the enforcement of the non-functional property on the process at runtime;
a process transformation tool to transform the process according to the enforcement pattern;
a memory module to load the annotation creator, profile creator, enforcement pattern creator, and process transformation tool; and
a processor to perform operations responsive to receiving input from one or more of the annotation creator, profile creator, enforcement pattern creator, and process transformation tool.

2. The computing system of claim 1, wherein the processor is further to send instructions to a design time environment to display the process.

3. The computing system of claim 1 or 2, wherein the annotation creator comprises:
a logic to define a name for the annotation; and
a logic to define one or more attributes, the attributes to include key-value pairs specifying parameters for enforcing the property expressed by the annotation.

4. The computing system of any one of the preceding claims , wherein the profile creator comprises:
a logic to define constraints on the applicability of the annotations in the set; and
a logic to define constraints on the interdependencies the annotations in the set.

5. A computer-implemented method, comprising:
creating a profile, the profile to group a set of annotations;
defining the set of annotations in the profile, the set of annotations to express one or more non-functional properties of a process;
defining constraints for the set of annotations;
defining one or more enforcement patterns to enforce the set of annotations on the process at runtime;
loading the profile in a design time environment;
annotating the process with one or more of the annotations in the profile; transforming the process to enforce the non-functional properties expressed by the annotations at runtime; and
executing the transformed process.

6. The computer-implemented method of claim 5, wherein defining the set of annotations comprises, for each of the annotations in the set:
defining a name for an annotation;
defining one or more attributes of the annotation;
defining constraints on the applicability of the annotation; and
defining constraints on the interdependencies between annotations.

7. The computer-implemented method of claim 5 or 6, wherein defining the enforcement pattern comprises:
loading a profile;
selecting an annotation in the profile; and
defining a set of process elements to replace a process model element annotated by the selected annotation.

8. The computer-implemented method of any one of the preceding claims, wherein transforming the process comprises:
loading the process;
identifying one or more annotations on process elements;
loading one or more enforcement patterns associated with the identified annotations; and
replacing each process element with an identified annotation with one or more process elements according to the enforcement pattern associated with the identified annotation.

9. A machine-readable medium having instructions therein that when executed by the machine, cause the machine to:
create a profile, the profile to group a set of annotations;
define the set of annotations in the profile, the set of annotations to express one or more non-functional properties of a process;
define constraints for the set of annotations;
define one or more enforcement patterns to enforce the set of annotations on the process at runtime;
load the profile in a design time environment;
annotate the process with one or more of the annotations in the profile;
transform the process to enforce the non-functional properties expressed by the annotations at runtime; and
executing the transformed process.

10. The machine-readable medium of claim 9, wherein instructions causing the machine to define a set of annotations, for each annotation in the set, cause the machine to:
define a name for an annotation;
define one or more attributes of the annotation;
define constraints on the applicability of the annotation; and
define constraints on the interdependencies between annotations.

11. The machine-readable medium of claim 9 or 10, wherein instructions causing the machine to define an enforcement pattern, cause the machine to:
load a profile;
select an annotation in the profile; and
define a set of process elements to replace a process model element annotated by the selected annotation.

12. The machine-readable medium of any one of the preceding claims, wherein instructions causing the machine to transform the process, cause the machine to:
load the process;
identify one or more annotations on process elements;
load one or more enforcement patterns associated with the identified annotations; and
replace each process element with an identified annotation with one or more process elements according to the enforcement pattern associated with the identified annotation.
